Europäisches Patentamt

European Patent Office

Office européen des brevets

(11) Publication number: **0 085 215**
**B1**

(12) **EUROPEAN PATENT SPECIFICATION**

(45) Date of publication of patent specification: **08.01.86**

(21) Application number: **82300543.4**

(22) Date of filing: **03.02.82**

(51) Int. Cl.⁴: **B 23 K 9/30**

(54) **Arc-welding method.**

(43) Date of publication of application:
**10.08.83 Bulletin 83/32**

(45) Publication of the grant of the patent:
**08.01.86 Bulletin 86/02**

(84) Designated Contracting States:
**DE FR GB SE**

(56) References cited:
**WO-A-82/01839**
**DE-A-2 737 055**
**DE-A-3 150 813**
**FR-A-2 478 508**
**GB-A-2 027 236**
**GB-A-2 090 434**
**US-A-4 151 395**

(73) Proprietor: **NIPPON KOKAN KABUSHIKI KAISHA**
**1-2 Marunouchi 1-chome Chiyoda-ku Tokyo 100 (JP)**

(72) Inventor: **Nomura, Hirokazu**
**6-224-62, Kamihamacho**
**Tsu-City Mie Pref. (JP)**
Inventor: **Sugitani, Yuji**
**251-11, Toriicho**
**Tsu-City Mie Pref. (JP)**
Inventor: **Suzuki, Yasuo**
**372-80, Nomuracho**
**Hisai-City Mie Pref. (JP)**

(74) Representative: **Wood, Anthony Charles et al**
**c/o MICHAEL BURNSIDE & PARTNERS**
**2 Serjeants' Inn Fleet Street**
**London EC4Y 1HL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an arc-welding method which comprises reciprocally moving a welding torch, following the face of a groove formed between the objects of welding, in the width direction of said groove, and, at the same time, continuously moving said torch in the longitudinal direction of said groove to automatically weld said objects of welding together in the longitudinal direction of said groove.

An arc-welding is known, which comprises, when welding objects of welding together in the longitudinal direction of a groove formed between the objects of welding by the arc-welding method using a consumable or non-consumable welding electrode, reciprocally moving a welding torch, following the face of the groove, in the width direction of said groove, and, at the same time, continuously moving said torch in the longitudinal direction of said groove, to automatically weld the objects of welding together in the longitudinal direction of the groove.

In order to weld the objects of welding together by the above-mentioned method, it is necessary to reciprocally move the welding torch, following the face of the groove, in the width direction of and in the vertical direction toward the groove, and reverse the direction of movement of the welding torch at a prescribed position relative to the groove while maintaining the distance between the tip of the welding electrode and the groove at a prescribed distance. In order to cause the welding torch to follow the face of the groove, it is necessary to detect the position of the tip of the welding electrode relative to the groove.

For the purpose of detecting the position of the tip of the welding electrode relative to the groove, the conventional practice has been to employ a contact type detecting sensor which detects the position of the welding electrode relative to the groove, by providing a roller as a follower near the welding electrode and causing this roller to be in contact with the face of the groove, with the use of a differential transformer, a potentiometer or a limit switch, or to employ a non-contact type detecting sensor which detects the welding electrode relative to the groove, by an electromagnetic or optical position detector provided near the welding electrode, with the use of magnetism or light.

In any of the above-mentioned conventional detecting methods, there is a certain distance between the detecting position by the above-mentioned sensor and the position of the welding electrode, since the position of the welding electrode is detected by the sensor provided at a certain distance apart from the welding electrode. When controlling the position of the welding electrode, therefore, it was necessary to set a time-lag depending upon the aforementioned distance to correct the result detected by the sensor, and this has led to a complicated control device and to the problem of impossibility to achieve a high accuracy in controlling.

As a welding method to solve these problems, therefore, we proposed an arc-welding method as disclosed in Japanese Patent Provisional Publication No. 19,445/70 dated February 15, 1979 (hereinafter referred to as the Japanese publication). An arc welding method is also disclosed in French patent No. 2479508 dated 25th September 1981 (hereinafter referred to as the French publication).

The Japanese and French publications each describe an arc welding method which comprises, without separately providing a sensor for detecting the position of the welding electrode, detecting the position of the welding electrode by means of the arc itself produced between the tip of the welding electrode and the groove, and causing the tip of the welding electrode to follow the face of the groove by controlling the position of the welding electrode on the basis of the result of detection.

The method of the Japanese publication comprises: directing a welding torch substantially vertically toward a groove formed between objects to be welded; directing a welding electrode through said torch toward said groove; feeding a welding current to said electrode to produce an arc between the tip of said electrode and said groove to weld the objects together by means of the arc heat; moving said torch in the width direction of the groove; continuously detecting one of arc voltage and arc current of said arc; calculating any deviation of the thus detected value from the value of one of previously set arc voltage and arc current; moving the torch vertically up and down so that the deviation becomes null, thereby maintaining the distance between the tip of the electrode and the groove substantially at a prescribed distance during the movement of said torch in the width direction of said groove; continuously detecting the vertical position of the torch with respect to the groove for each movement of said torch in the width direction of the groove and representing said detected vertical position by a value of voltage from a potentiometer; reversing the direction of movement of said torch in the width direction of the groove at the moment when the value of voltage agrees with a particular set value of voltage; repeating the movement of the torch in the width direction of the groove, the movement of the torch in the vertical direction, and the reversal of the direction of the movement of the torch in the width direction of the groove; on the other hand, continuously moving the torch in the longitudinal direction of the groove; thereby reciprocally moving the torch in the width direction of the groove following the face of the groove while maintaining the distance between the tip of the electrode and the groove substantially at said prescribed distance, and, at the same time, moving the torch in the longitudinal direction of the groove so as to weld the objects in the longitudinal direction of the groove.

According to the method presented above, since it is possible to detect the position of the welding electrode by the arc itself and carry out welding by causing the welding electrode to follow the groove face on the basis of the result of this detection, it is not necessary to separately provide a sensor for detecting the position of the welding electrode, and it is possible to control the position of the welding electrode at a high accuracy.

However, the above-mentioned method was found to involve the following problems. Upward or downward inclinations or wavy deformations often exist on the bottom face of the groove formed between the objects to be welded. According to the above-mentioned method, since the reversal of the reciprocating torch in the width direction of the groove is effected at the moment when the value of voltage indicating the vertical position of the torch agrees with a particular set value of voltage representing the predetermined reversing position of the torch, i.e., the reversing height of the torch determined on the basis of the height of rails on which a carriage of the torch travels, the torch would be reversed always at the above-mentioned predetermined reversing height of the torch, irrespective of the presence of the upward or downward inclinations or the wavy deformations appearing on the bottom face of the groove, i.e., not at a certain height from the bottom face of the groove. As a result, the height of the formed bead from the bottom face of the groove becomes non-uniform, thus resulting in a defective penetration and production of welding defects, and leading to the impossibility of reversing the torch when the bottom face of the groove inclines upward.

In the method described in the French publication, the torch is moved vertically up and down, so that the above described deviation becomes null, during movement of the torch across a central zone in the width direction of the groove, and then the distance between the tip of the electrode and the groove is maintained at a prescribed distance during movement of the torch in the peripheral zones of the width of the groove. The reversing signal is again obtained by comparison with a preset reference value and thus the above described problems again occur: namely the torch is not necessarily reversed at a desired point of reversal if the bottom face of the groove has a slope or wavy deformations.

An object of the present invention is therefore to provide an arc-welding method which, when reciprocally moving a welding electrode directed substantially vertically through a welding torch toward a groove formed between objects to be welded, following the face of said groove, in the width direction of the groove, and, at the same time, moving said torch in the longitudinal direction of said groove to automatically arc-weld said objects together in the longitudinal direction of said groove, permits automatic reversal of the direction of movement of the reciprocating torch in the width direction of the groove at a certain height from the bottom face of the groove even if the bottom face of the groove is formed by the upward or downward inclinations or the wavy deformations, thereby allowing formation of a weld bead always at a substantially constant height from the bottom face of the groove.

The present invention provides a method according to the Japanese publication, as set out hereinbefore, and characterised by:

calculating, for each movement of said torch in the width direction of said groove, a voltage value ($e_o$) to serve as said particular set value of voltage with which said value of voltage ($e_v$) is to agree for reversing the direction of movement of said torch in the width direction of said groove, said voltage value ($e_o$) being calculated as the difference between a predetermined voltage value representative of a desired height (H) above the bottom of the groove for said direction reversing and the value ($e_p$) of said voltage ($e_v$) from said potentiometer when said torch was at the lowest position with respect to said groove during a said movement in the width direction of said groove.

An embodiment of the invention will now be described, by way of example, with reference to the accompanying drawings, in which:—

Fig. 1 is a descriptive view illustrating the principle of the present invention;

Figure 2 is a block diagram illustrating an embodiment of the present invention;

Fig. 3(A) is a descriptive view illustrating the movement of the welding electrode by means of the locus on a plane;

Fig. 3(B) is a descriptive view illustrating the movement of the welding electrode by means of the locus along the groove face;

Figure 3(C) is a wave-form diagram of values of voltage $e_v$, $e_p$ and $e_o$ shown in the block diagram of Fig. 2; and,

Fig. 3(D) is a wave-form diagram illustrating pulse signals fed by the horizontal driving motor controller shown in the block diagram of Fig. 2.

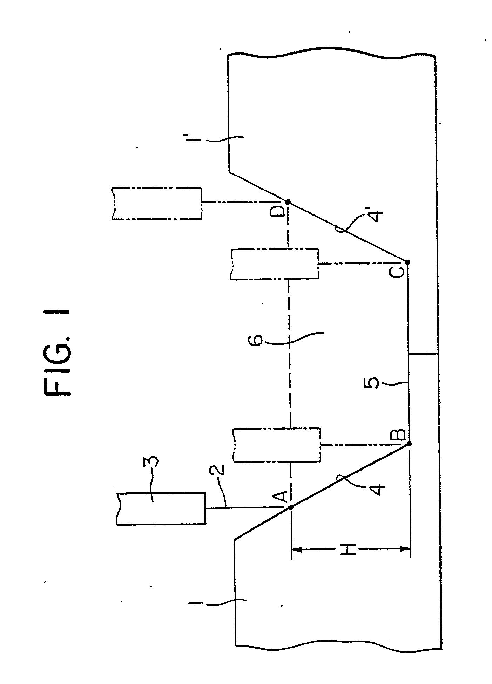

Now, an arc-welding method according to the present invention is described with reference to the drawings. Fig. 1 is a descriptive view illustrating the principle of the present invention. In Fig. 1, 1 and 1' are objects to be welded; 6 is a U-shaped groove, which comprises inclined opposite faces 4 and 4' opening upward and a bottom face 5, formed between the objects 1 and 1'; 2 is a welding electrode inserted substantially vertically into the groove 6; 3 is a welding torch for inserting the welding electrode 2, said welding electrode 2 may be a consumable electrode, i.e., a wire fed at a constant rate or may be a non-consumable electrode. An arc is produced between the tip of the welding electrode 2 and the groove 6 to weld the objects of welding 1 and 1' together by means of the arc heat. The welding position of the groove 6 is shielded from the open air by a shielding gas ejected from the tip of the torch 3 or ejected from a nozzle (not shown) separately provided.

The torch 3 goes down, as shown by the two-point chain line in Fig. 1, from point A on the inclined face 4 on one side along the inclined face 4 to point B on the bottom face 5, then moves along the bottom face 5 to point C, and then rises along the inclined face 4' on the other side to point D. In this movement, the torch 3 is vertically moved up and down so as to maintain the arc voltage or the arc current of the arc produced between the tip of the welding electrode 2 and the groove 6 always at a constant value, thereby maintaining the distance between the tip of the welding electrode 2 and the groove 6 at a prescribed distance. The vertical position of the torch 3 moving vertically up and down relative to the groove 6 is continuously detected as a value of voltage for each movement of the torch in the width direction of the groove 6. At the moment when the torch rises by a prescribed distance H from the bottom face 5 of the groove 6, as indicated by the above-mentioned detected value of voltage, that is, when the detected value of voltage agrees with the value of voltage representing the vertical position of the torch 3 at point D in Fig. 1, the direction of movement of the torch 3 in the width direction of the groove 6 is reversed.

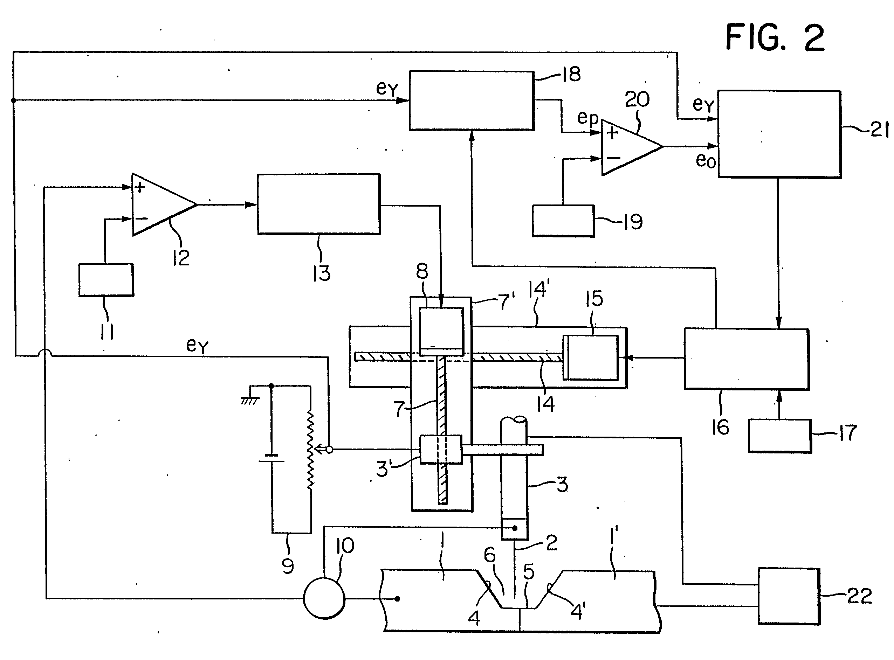

Fig. 2 is a block diagram illustrating an embodiment of the present invention, which represents a case in which the torch 3 is vertically moved up and down so as to maintain the arc voltage of the arc produced between the tip of the welding electrode 2 and the groove 6 always at a constant value. In Fig. 2, the torch 3 having therethrough the welding electrode 2 inserted substantially vertically into the groove 6 formed between the objects of welding 1 and 1' is moved in the longitudinal direction of the groove 6 by the carriage travelling on rails (not shown) installed on one of the objects of welding 1 and 1' in parallel with the longitudinal direction of the groove 6.

In Fig. 2, 7 is a vertical screw stock for moving the torch 3 vertically up and down; 7' is a fitting of the vertical screw stock 7; 8 is a lifting motor, provided on the top of the fitting 7', for rotating the vertical screw stock 7 to move the torch 3 vertically up and down; and a support member 3' for supporting the torch 3 threadably engages with the vertical screw stock 7. Also in this figure, 14 is a horizontal screw stock for horizontally moving the torch 3; 14' is a fitting of the horizontal screw stock 14; 15 is a horizontal movement motor, provided at one end of the fitting 14'; for rotating the horizontal screw stock 14 to horizontally move the torch 3; and the fitting 7', to which the vertical screw stock 7 is fitted, engages threadably with the horizontal screw stock 14. Therefore, the torch 3 is moved vertically up and down while moved in the width direction of the groove 6 by the drives of the lifting motor 8 and the horizontal movement motor 15.

Also in Fig. 2, 10 is an arc voltage detector connected between the torch 3 and one of the objects of welding 1; 11 is an arc voltage standard setter; 12 is a differential amplifier for calculating the deviation of the value of a voltage detected by the arc voltage detector 10 from a value of arc voltage previously set by the arc voltage standard setter 11 and for amplifying this deviation to a certain level to issue a deviation signal; and 13 is a lifting motor controller which controls driving of the lifting motor 8 and reversal of the driving direction thereof on the basis of the deviation signal issued from the differential amplifier 12. The value of arc voltage detected by the arc voltage detector 10 is compared by the differential amplifier 12 with the value of arc voltage previously set by the arc voltage standard setter 11. The differential amplifier 12 feeds to the lifting motor controller 13 the deviation signal of the detected value of arc voltage from the set value of arc voltage, and thereby the lifting motor controller 13 drives the lifting motor 8 so as to bring the deviation signal to null. Thus, the torch 3 moving in the width direction of the groove 6 is controlled so that the distance between the tip of the welding electrode 2 and the groove 6 is maintained always at a prescribed distance.

In the same figure, 9 is a potentiometer indicating the vertical position of the torch 3 moving vertically up and down relative to the groove 6 as a value of voltage; 16 is a horizontal movement motor controller having mechanism for controlling the driving and reversal of the driving direction of the horizontal movement motor 15 and for producing a pulse at the time of reversing the driving direction; 17 is a driving speed setter for ensuring driving of the horizontal movement motor 15 at a constant speed; and, 18 is a peak hold circuit for receiving the output values of voltage issued from the potentiometer 9 and holding the peak value of voltage thereof.

Further, 19 is a setter storing a previously set value of voltage, corresponding to a previously set height from the bottom face 5 of the groove 6 for reversing the direction of movement of the torch 3 in the width direction of the groove 6; 20 is a differential amplifier which calculates the value of difference between the peak value of voltage held in the peak hold circuit 18 and said value of voltage stored in the setter 19, and putting out this value of difference after amplifying it to a certain level; 21 is a comparator which issues a movement reversing signal of the torch 3 in the width direction of the groove 6 to the horizontal movement motor controller 16 at the moment when the value of voltage continuously put out from the potentiometer 9 agrees with the value of voltage calculated by said differential amplifier 20; and, 22 is a DC constant-current source for welding connected between the object of welding 1' and the torch 3.

For each movement of the torch 3 in the width direction of the groove 6, the vertical position of the torch 3 is continuously detected by the potentiometer 9 as a value of voltage $e_Y$, and the potentiometer 9 sends this detected value of voltage $e_Y$ to the peak hold circuit 18 and the comparator 21. The potentiometer 9 is arranged so that a higher value of voltage is produced according as the torch 3 goes down toward the bottom face 5 of the groove 6. By this arrangement, the potentiometer 9 continuously sends the value of voltage $e_Y$, which becomes higher according as the torch 3 goes down along the inclined face 4 on one side toward the bottom face 5 in the groove 6 and becomes lower according as the torch 3 goes up from the bottom face 5 along the inclined face 4' on the other side in the groove 6, to the peak hold circuit 18 and the comparator 21.

The peak hold circuit 18 holds, for each movement of the torch 3 in the width direction of the groove 6, the peak value of voltage from among values of voltage $e_Y$ received from the potentiometer 9 in said one movement, i.e., the value of voltage $e_p$ at the moment when the torch 3 is at its lowest position with respect to the groove 6, and sends this value of voltage $e_p$ to the differential amplifier 20. The differential amplifier 20 calculates the value of difference in voltage between a previously set value of voltage H stored in the setter 19 and the value of voltage $e_p$ held in the peak hold circuit 18 representative of the torch 3 being at its lowest position, i.e., the value of voltage $e_0$ indicating the reversing position of the direction of movement of the torch 3, and sends this value of voltage $e_0$ to the comparator 21.

The comparator 21 compares, for each movement of said torch 3, the value of voltage $e_Y$ indicating the vertical position of the torch 3 detected continuously by the potentiometer 9 with the value of voltage $e_0$ indicating the reversing position of the direction of movement of said torch 3 to issue a movement reversing signal of the torch 3 to the horizontal movement motor controller 16 when said value of voltage $e_Y$ agrees with said value of voltage $e_0$. The horizontal movement motor controller 16 reverses the rotation of the horizontal movement motor 15 by means of said movement reversing signal. As a result, the rotation of the horizontal screw stock 14 is reversed, thus resulting in the reversal of the direction of movement of the torch 3 in the width direction of the groove 6 through the fitting 7' engaging threadably with the horizontal screw stock 14.

At the same time as said reversal of the direction of movement of the torch 3, the horizontal movement motor controller 16 issues a pulse signal to the peak hold circuit 18. The peak hole circuit 18 clears the holding of the value of voltage $e_p$ for that movement in response to said pulse signal. Then, along with the reversal of the direction of movement of the torch 3, the peak hold circuit 18 repeats the above-mentioned operations, upon receipt of a new value of voltage $e_Y$ representing the vertical position of the torch 3 sent from the potentiometer 9. Thus, the direction of movement of the torch 3 in the width direction of the groove 6 is reversed at a certain height from the bottom face 5 of the groove 6.

The above-mentioned movement of the torch 3 in the width direction of the groove and vertically thereto, and the reversal of the direction of movement of the torch 3 in the width direction of the groove 6 are repeated, thereby reciprocally moving the tip of the welding electrode 2 in the width direction of the groove 6, following the face of the groove 6, while maintaining the distance between the tip of the welding electrode 2 and the groove 6 always at a prescribed distance, and at the same time, moving said torch in the longitudinal direction of the groove thus to weld the objects of welding 1 and 1' together in the longitudinal direction of the groove 6. Multi-layer welding is thus applied in the groove 6 by repeating the steps as mentioned above, and welding of the objects of welding 1 and 1' is completed.

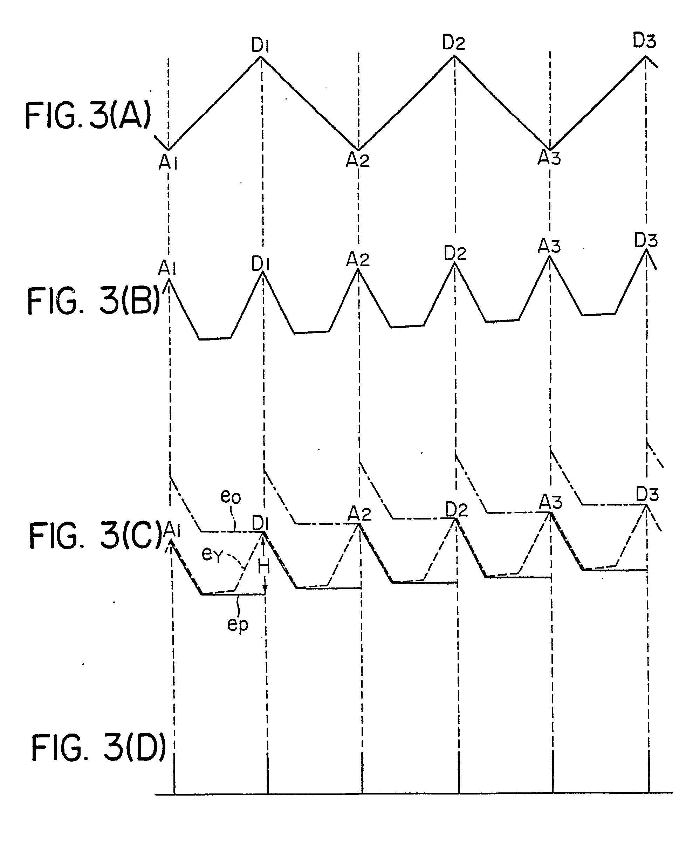

Now, the present invention is described with reference to Figs. 3(A) to 3(D) as to an embodiment in the case where the bottom face of the groove 6 formed between the objects of welding 1 and 1' has an upward inclination in the travelling direction of the torch 3 and the rails for the carriage for moving the torch 3 installed on the object of welding 1 and 1' is not parallel to the bottom face of said groove 6 in the travelling direction of the torch 3. Fig. 3(A) is a descriptive view illustrating continuously the movement of the welding electrode 2 by means of the locus on the plane; Fig. 3(B) is a descriptive view illustrating continuously the movement of the welding electrode 2 by means of the locus along the groove face; Fig. 3(C) is a wave-form diagram of values of voltage $e_Y$, $e_P$ and $e_0$ shown in the block diagram of Fig. 2, said values of voltage $e_Y$, $e_P$ and $e_0$ are indicated along the longitudinal axis of the wave-form diagram so as to increase in the downward direction of the axis; and, Fig. 3(D) is a wave-form diagram illustrating pulse signals fed by the horizontal movement motor controller 16 shown in the block diagram of Fig. 2.

In Figs. 3(A) and 3(B), when the direction of movement of the torch 3 is reversed at point $A_1$ on the inclined face on one side of the groove 6, a pulse signal shown in Fig. 3(D) for clearing the holding of the value of voltage $e_P$ for the preceding cycle and starting storage of the position of the torch 3 at point $A_1$ is entered from the horizontal movement motor controller 16 into the peak hold circuit 18. The torch 3 travels from point $A_1$ on the inclined face on one side toward point $D_1$ on the other side in the groove 6 while moving up and down along the face of the groove 6 as shown in Fig. 3(B).

The vertical positions of the torch 3 moving in the groove 6 are issued from the potentiometer 9 as the values of the voltage $e_Y$ which becomes higher according as the torch 3 goes from point $A_1$ down toward the bottom face of the groove 6, as shown by the dotted line in Fig. 3(C). The peak value of voltage of said values of voltage $e_Y$, i.e., the value of voltage $e_P$ at the moment when the torch 3 is at its lowest position with respect to the groove 6 is held by the peak hold circuit 18, as shown by the solid line in Fig. 3(C).

In Fig. 3(C), H is the value of voltage corresponding to the height from the bottom face 5 of the groove 6, stored in the setter 19, for reversing the direction of movement of the torch 3 in the width direction of the groove 6, and $e_0$ represented by the one-point chain line is the value of difference in voltage between said value of voltage H and the value of voltage $e_P$ at the moment when the torch 3 is at its lowest position with respect to the groove 6, i.e., the value of voltage indicating the reversing position of the torch 3, for each movement of the torch 3 in the width direction of the groove 6.

The value of voltages $e_Y$ indicated by the potentiometer 9 become lower according as the torch 3 goes from the bottom face up toward point $D_1$ on the inclined face on the other side in the groove 6, and at point $D_1$ where said value of voltage $e_Y$ agrees with the value of voltage $e_0$ indicating the reversing position of said torch 3, the direction of movement of the torch 3 in the width direction of the groove 6 is reversed. By the repetition of the above-mentioned steps, the torch 3 moves in the longitudinal direction of the groove 6 while reversing the direction of movement in the width direction of the groove at a certain height from the lowest position in the groove 6. Therefore, a weld bead with a uniform height is formed in the groove 6, and thus the objects 1 and 1' are satisfactorily welded together.

In the above-mentioned example, when determining the value of voltage $e_0$ indicating the reversing position of the torch 3, the value of difference between the previously set value of voltage and the value of voltage indicated by the potentiometer 9 representative of said torch being at the lowest position thereof has been calculated on the basis of the value of voltage indicated by the potentiometer 9 representative of the torch 3 being at the lowest position thereof in each movement of the torch 3 in the width direction of the groove 6, for said one movement. This calculation may be made on the basis of the value of voltage indicated by the potentiometer 9 representative of the torch 3 having been at its lowest position in one of the two movements preceding said one movement. In this case, a memory circuit is provided in the peak hold circuit 18, and the value of voltage $e_P$ when the tip of the welding electrode 2 has been at the lowest position in the groove 6 in one of the movements preceding said one movement is stored in this memory circuit. Said value of voltage $e_P$ thus stored is issued to the differential amplifier 20 in response to the pulse signal issued at the time of reversal of the direction of movement of the torch 3.

Also in the above-mentioned example, the distance between the tip of the welding electrode 2 and the groove 6 has been maintained at a certain distance by detecting the arc voltage with the use of a constant-current electric power source and controlling the vertical position of the torch 3 so as to keep this arc voltage always at a prescribed value. This may also be accomplished by detecting the arc current with the use of a constant-voltage electric power source in place of the arc voltage, and controlling the vertical position of the torch 3 so as to keep this arc current always at a prescribed value.

According to the arc-welding method of the present invention, as described above, when reciprocally moving a welding electrode directed substantially vertically toward a groove formed between objects of welding through a welding torch, following the face of said groove, in the width direction of the groove, and, at the same time, moving said torch in the longitudinal direction of said groove to automatically arc-weld the objects of welding together in the longitudinal direction of said groove, it is possible to reverse the direction of movement of the reciprocating torch in the width direction of the groove, automatically at a certain height from the bottom face of the groove, even in the presence of the upward or downward inclinations or the wavy deformations on the bottom face of the groove. It is therefore possible to form a bead always with a constant height from the bottom face of the groove therein, resulting in a satisfactory penetration and hence an excellent weld, thus providing industrially useful effects.

**Claims**

1. An arc-welding method comprising:
directing a welding torch (3) substantially vertically toward a groove (6) formed between objects (1, 1') to be welded; directing a welding electrode (2) through said torch (3) toward said groove (6); feeding a welding current to said electrode (2) to produce an arc between the tip of said electrode (2) and said groove (6) to weld said objects together by means of the arc heat; moving said torch (3) in the width direction of said groove (6); continuously detecting one of arc voltage and arc current of said arc; calculating any deviation of the thus detected value from the value of one of previously set arc voltage and arc current; moving said torch (3) vertically up and down so that said deviation becomes null, thereby maintaining the distance between the tip of said electrode (2) and said groove (6) substantially at a prescribed distance during the movement of said torch (3) in the width direction of said groove (6); continuously detecting the vertical position of said torch (3) with respect to the groove (6) for each movement of said torch (3) in the width direction of said groove (6) and representing said detected vertical position by a value of voltage $(e_Y)$ from a potentiometer (9); reversing the direction of movement of said torch (3) in the width direction of said groove (6) at the moment when said value of voltage $(e_Y)$ agrees with a particular set value of voltage; repeating the movement of said torch (3) in the width direction of said groove (6), the movement of said torch in the vertical direction, and the reversal of the direction of the movement of said torch (3) in the width direction of said groove (6); on the other hand, continuously moving said torch (3) in the longitudinal direction of said groove (6); thereby reciprocally moving said torch (3) in the width direction of said groove (6) following the face (4, 5, 4') of said groove (6) while maintaining the distance between the tip of said electrode (2) and said groove (6) substantially at said prescribed distance, and, at the same time, moving said torch in the longitudinal direction of said groove so as to weld said objects (1, 1') in the longitudinal direction of said groove (6);

characterised by:

calculating, for each movement of said torch (3) in the width direction of said groove (6), a voltage value (e₀) to serve as said particular set value of voltage with which said value of voltage (e$_v$) is to agree for reversing the direction of movement of said torch (3) in the width direction of said groove (6), said voltage value (e₀) being calculated (by 20) as the difference between a predetermined voltage value (from 19) representative of a desired height (H) above the bottom of the groove (6) for said direction reversing and the value (e$_P$) of said voltage (e$_v$) from said potentiometer (9) when said torch (3) was at the lowest position with respect to said groove (6) during a said movement in the width direction of said groove (6).

2. A method according to claim 1 characterised in that said value (e$_p$) of said voltage (e$_v$) from said potentiometer (9) when said torch (3) was at the lowest position is the value (e$_p$) obtained during the same movement in which said calculating step is being effected.

3. A method according to claim 1 characterised in that said value (e$_p$) of said voltage (e$_v$) from said potentiometer (9) when said torch (3) was at the lowest position is the value (e$_p$) obtained during one of the two said movements prior to that movement in which said calculating step is being effected.

**Patentansprüche**

1. Lichtbogenschweißverfahren, bei dem ein Schweißbrenner (3) im wesentlichen lotrecht zu einer zwischen zu verschweißenden Objektiven (1, 1') ausgebildeten Nut oder Rille (6) gerichtet wird, eine Schweißelektrode (2) durch den Schweißbrenner (3) zur Rille (6) geführt oder gerichtet wird, der Elektrode (2) ein Schweißstrom zugeführt wird, um zwischen der Spitze der Elektrode (2) und der Rille (6) einen Lichtbogen zum Zusammenschweißen der Objekte mittels der Lichtbogenhitze zu erzeugen, der Schweißbrenner (3) in Breitenrichtung der Rille (6) bewegt wird, kontinuierlich die Lichtbogenspannung oder der Lichtbogenstrom erfaßt bzw. gemessen wird, eine etwaige Abweichung der so erfaßten Größe von der Größe der vorher eingestellten Lichtbogenspannung oder des vorher eingestellten Lichtbogenstroms berechnet wird, der Schweißbrenner (3) derart lotrecht aufwärts und abwärts bewegt wird, daß die Abweichung zu Null wird, um damit den Abstand zwischen der Spitze der Elektrode (2) und der Rille (6) während der Bewegung des Schweißbrenners (3) in Breitenrichtung der Rille (6) praktisch auf einer vorgeschriebenen Größe zu halten, die lotrechte Stellung des Schweißbrenners (3) in bezug auf die Rille (6) für jede Bewegung des Schweißbrenners (3) in Breitenrichtung der Rille (6) kontinuierlich ermittelt und die ermittelte lotrechte Stellung durch eine Größe der Spannung (e$_v$) von einem Potentiometer dargestellt wird, die Richtung der Bewegung des Schweißbrenners (3) in Breitenrichtung der Rille (6) in dem Augenblick umgekehrt wird, in welchem die Größe der Spannung (e$_v$) mit einer bestimmten eingestellten oder Soll-Größe der Spannung übereinstimmt, die Bewegung des Schweißbrenners (3) in Breitenrichtung der Rille (6), die Bewegung des Schweißbrenners in lotrechter Richtung und die Umkehr der Bewegungsrichtung des Schweißbrenners (3) in Breitenrichtung der Rille (6) wiederholt werden, andererseits der Schweißbrenner (3) kontinuierlich in Längsrichtung der Rille (6) bewegt wird, wobei der Schweißbrenner (3), der Fläche (4, 5, 4') der Rille (6) folgend, hin- und hergehend in Breitenrichtung der Rille (6) geführt wird, während der Abstand zwischen der Spitze der Elektrode (2) und der Rille (6) praktisch auf der vorgeschriebenen Größe gehalten wird, und gleichzeitig der Schweißbrenner in Längsrichtung der Rille bewegt wird, um die Objekte (1, 1') in Längsrichtung der Rille (6) zu schweißen, dadurch gekennzeichnet, daß

für jede Bewegung des Schweißbrenners (3) in Breitenrichtung der Rille (6) eine Spannungsgröße (e₀) berechnet wird, die als die bestimmte Soll-Größe der Spannung dient, mit welcher die Größe der Spannung (e$_v$) für die Umkehrung der Bewegungsrichtung des Schweißbrenners (3) in Breitenrichtung der Rille (6) übereinstimmen soll, wobei die Spannungsgröße (e₀) als Differenz zwischen einer vorbestimmten Spannungsgröße (von 19), die für eine gewünschte Höhe (H) über der Sohle der Rille (6) für die Richtungsumkehr repräsentativ ist, und der Größe (e$_P$) der Spannung (e$_v$) vom Potentiometer (9), wenn sich der Schweißbrenner (3) in der tiefsten Stellung in bezug auf die Rille (6) während einer (der) Bewegung in Breitenrichtung der Rille (6) befand, berechnet (durch 20) wird.

2. Verfahren nach Anspruch 1, dadurch gekennzeichnet, daß die Größe (e$_P$) der Spannung (e$_v$) vom Potentiometer (9), wenn sich der Schweißbrenner (3) in der tiefsten Stellung befand, die Größe (e$_P$) ist, die während derselben Bewegung, bei welcher der Berechnungsschritt durchgeführt wird, erhalten wird.

3. Verfahren nach Anspruch 1, dadurch gekennzeichnet, daß die Größe (e$_P$) der Spannung (e$_v$) vom Potentiometer (9), wenn sich der Schweißbrenner (3) in der tiefsten Stellung befand, die Größe (e$_P$) ist, die während einer der beiden Bewegungen vor der Bewegung, bei welcher der Berechnungsschritt durchgeführt wird, erhalten wird.

**Revendications**

1. Procédé de soudage à l'arc, comprenant:

la direction d'un chalumeau de soudage (3) en direction sensiblement verticale vers une gorge (6) formée entre des objets (1, 1') à souder, la direction d'une électrode de soudage (2) dans le chalumeau (3) vers la gorge (6), la transmission d'un courant de soudage à l'électrode (2) afin qu'un arc soit formé entre l'extrémité de l'électrode (2) et la gorge (6) et que les objets soient soudés à l'aide de la chaleur de l'arc, le déplacement du chalumeau (3) dans la direction de la largeur de la gorge (6), la détection continue de la tension ou du courant de l'arc, le calcul de l'écart de la valeur ainsi détectée par rapport à la valeur d'une tension ou d'un courant d'arc préalablement réglée, le déplacement du chalumeau (3) en direction verticale vers le haut et vers le bas de manière que l'écart devienne nul, avec maintien de cette manière de la distance entre l'extrémité de l'électrode (2) et la gorge (6) à une valeur prescrite sensiblement pendant le déplacement du chalumeau (3) dans la direction de la largeur de la gorge (6), la détection continue de la position verticale du chalumeau (3) par rapport à la gorge (6) pour chaque déplacement du chalumeau (3) dans la direction de la largeur de la gorge (6) et la représentation de la position verticale détectée par une valeur d'une tension ($e_v$) provenant dun potentiomètre (9), l'inversion du sens de déplacement du chalumeau (3) dans la direction de la largeur de la gorge (6) au moment où la valeur de la tension ($e_v$) correspond à une valeur réglée particulière de la tension, la répétition du déplacement du chalumeau (3) dans la direction de la largeur de la gorge (6), du déplacement du chalumeau dans la direction verticale et de l'inversion du sens de déplacement du chalumeau (3) dans la direction de la largeur de la gorge (6), d'autre part, le déplacement continu du chalumeau (3) dans la direction longitudinale de la gorge (6), avec de cette manière déplacement alternatif du chalumeau (3) dans la direction de la largeur de la gorge (6) suivant la face (4, 5, 4') de la gorge (6) avec maintien de la distance comprise entre l'extrémité de l'électrode (2) et la gorge (6) sensiblement à la valeur prescrite, et, simultanément, le déplacement du chalumeau dans la direction longitudinale de la gorge de manière que les objets (1, 1') soient soudés dans la direction longitudinale de la gorge (6), caractérisé par

le calcul, pour chaque déplacement du chalumeau (3) dans la direction de la largeur de la gorge (6), d'une valeur de tension ($e_0$) destinée à servir comme valeur réglée particulière de la tension à laquelle ladite valeur de tension ($e_v$) doit correspondre pour que le sens de deplacement du chalumeau (3) dans la direction de la largeur de la gorge (6) soit inversé, la valeur de tension ($e_0$) étant calculée (par 20) sous forme de la différence entre une valeur prédéterminée de tension (de 19) représentative d'une hauteur voulue (H) au-dessus du fond de la gorge (6) pour l'inversion du sens, et la valeur ($E_P$) de ladite tension ($e_v$) du potentiomètre (9) lorsque le chalumeau (3) s'est trouvé à la position la plus basse par rapport à la gorge (6) pendant ledit déplacement dans le sens de la largeur de la gorge (6).

2. Procédé selon la revendication 1, caractérisé en ce que ladite valeur ($e_P$) de la tension ($e_v$) du potentiomètre (9), lorsque le chalumeau (3) s'est trouvé dans la position la plus basse, est la valeur ($e_P$) obtenue pendant le même déplacement au cours duquel l'opération de calcul a été effectuée.

3. Procédé selon la revendication 1, caractérisé en ce que ladite valeur ($e_P$) de la tension ($e_v$) du potentiomètre (9) lorsque le chalumeau (3) s'est trouvé dans sa position la plus basse, est la valeur ($e_P$) obtenue pendant l'un des deux déplacements correspondants précédant le déplacement dans lequel l'opération de calcul est effectuée.

# FIG. I

0 085 215

FIG. 2

0 085 215

FIG. 3(A)

FIG. 3(B)

FIG. 3(C)

FIG. 3(D)